# EUROPÄISCHE PATENTSCHRIFT

(11) **EP 2 671 056 B1**
(45) Veröffentlichungstag und Bekanntmachung des Hinweises auf die Patenterteilung: **11.03.2015**
(21) Anmeldenummer: 12701833.1
(22) Anmeldetag: 25.01.2012
(51) Int. Cl.: G01G 21/28, G01G 23/37, B01L 9/02, B08B 15/02, B01L 99/00

(54) **WÄGEKABINE MIT INTEGRIERTER WAAGE**
WEIGHING COMPARTMENT WITH INTEGRATED BALANCE
CABINE DE PESÉE À BALANCE INTÉGRÉE

(30) Priorität: 01.02.2011 DE 102011000429
(43) Veröffentlichungstag der Anmeldung: 11.12.2013
(73) Patentinhaber: Sartorius Lab Instruments GmbH & Co. KG, 37075 Göttingen (DE)
(72) Erfinder: FELDOTTE, Heinrich, 37079 Göttingen (DE); LAUBSTEIN, Michael, 37077 Göttingen (DE)
(86) Internationale Anmeldenummer: PCT/EP2012/000328
(87) Internationale Veröffentlichungsnummer: WO 2012/104034

(56) Entgegenhaltungen:
- EP-A1- 1 367 372
- EP-A2- 1 354 643
- FR-A1- 2 889 987
- JP-A- 2009 115 471

## Beschreibung

Die Erfindung betrifft eine Wägekabine mit einer Arbeitsfläche, einer Waage, die in die Wägekabine integriert ist.

Bei der verwendeten Waage kann es sich insbesondere um eine Feinwaage handeln, die in Laboratorien der chemischen und pharmazeutischen Industrie und Forschung verwendet wird, um kleine Mengen von Substanzen abzuwiegen, beispielsweise weil für eine Analyse eine bestimmte Menge einer Probe benötigt wird oder weil verschiedene Substanzen in einem bestimmten Verhältnis gemischt werden sollen. Grundsätzlich besteht dabei das Problem, dass die Feinwaage sowie alle Oberflächen in ihrer Umgebung nach dem Abwiegen komplett gereinigt werden müssen, da andernfalls eine Kreuzkontamination mit Substanzen, die in einem sich anschließenden Wägevorgang dosiert werden, nicht ausgeschlossen werden kann. Dabei sind jedoch die bisher verwendeten Bedienelemente (beispielsweise Schalter) und Anzeigevorrichtungen (beispielsweise LCD-Displays) problematisch, da sie viele schlecht zu reinigende Kanten enthalten.

Relevante Schriften des Standes der Technik sind FR 2889987, EP 1354643 und DE 10 2009 000 653.

Die Aufgabe der Erfindung besteht darin, eine Wägekabine der eingangs genannten Art dahingehend weiterzubilden, dass sie mit geringem Aufwand zuverlässig gereinigt werden kann.

Zur Lösung dieser Aufgabe ist erfindungsgemäß eine Wägekabine mit einer Arbeitsfläche, einer Waage, die in die Wägekabine integriert ist und eine Waagschale aufweist, die an der Arbeitsfläche angeordnet ist, und mindestens einer Bedienfläche, die im Bereich der Arbeitsfläche angeordnet ist, wobei die Arbeitsfläche durch die Oberfläche einer ebenen, durchgehenden Platte gebildet ist, die Bedienfläche in die Arbeitsfläche integriert und als Sensorfläche ausgeführt ist und unterhalb der die Arbeitsfläche bildenden Platte ein Sensor angeordnet ist. Die Erfindung beruht auf dem Grundgedanken, keine Schalter, Tasten oder Ähnliches in der Wägekabine zu verwenden, sondern sie in Form von Bedienflächen "zu virtualisieren", also lediglich bestimmte Abschnitte der durchgehenden Arbeitsfläche für Funktionen vorzusehen. Somit kann die Arbeitsfläche durchgehend (mit Ausnahme des Bereichs der Waagschale) problemlos gereinigt werden, da sie keinerlei Kanten oder sonstige Gestaltungen aufweist, an denen sich Partikel festsetzen können. Beim verwendeten Sensor kann es sich um einen kapazitiven Sensor, einen optischen Sensor, einen induktiven Sensor oder auch einen akustischen Sensor handeln, der in der Lage ist, eine Eingabeinformation zu erkennen, die der Bediener über die Bedienfläche eingibt. Beispielsweise kann ein kapazitiver Sensor eine Berührung der Bedienfläche erkennen, die als Bestätigung einer vorhergehenden Eingabe interpretiert wird. Wenn die Bedienfläche in eine Vielzahl von Unterfeldern unterteilt ist, kann die Sensorfläche auch nach Art eines Touchpads genutzt werden, so dass der Bediener Ziffern oder Buchstaben eingeben kann.

Vorzugsweise ist vorgesehen, dass die Bedienfläche optisch markiert ist. Auf diese Weise ist für einen Benutzer jederzeit erkennbar, wo Eingabeinformationen eingegeben werden können.

Gemäß einer Ausführungsform der Erfindung ist vorgesehen, dass der Bedienfläche eine Projektionsvorrichtung zugeordnet ist, die unterschiedliche Bediensymbole auf die Bedienfläche projizieren kann. Somit können nach Art von situationsabhängigen Untermenüs verschiedene Eingabemöglichkeiten vorgegeben werden, die davon abhängen, in welchem Abschnitt des Wägeprozesses sich der Bediener gerade befindet.

Vorzugsweise ist vorgesehen, dass auf der Arbeitsfläche mindestens eine Anzeigefläche vorgesehen ist. Dies ermöglicht, beispielsweise das Gewicht der gerade abzuwiegenden Probe anzuzeigen, ohne dass hierfür eine körperliche Anzeigevorrichtung nötig ist, die wiederum schwer zu reinigen wäre. Alternativ kann die Anzeigefläche sich auch in der dem Arbeitsraum der Wägekabine zugewandten Rückwand befinden und mit Eingabeflächen kombiniert sein.

Vorzugsweise ist die Anzeigefläche durch ein durchsichtiges Fenster gebildet, unterhalb dessen eine Anzeigevorrichtung angeordnet ist. Auf diese Weise ist eine Verschmutzung der Anzeigevorrichtung nicht möglich, und die durchgehende Platte, welche die Arbeitsfläche bildet, kann einfach abgewischt werden.

Vorzugsweise ist vorgesehen, dass die Anzeigevorrichtung schräg zur Ebene der Platte angeordnet ist. Auf diese Weise ist sie für einen Bediener leichter lesbar.

Gemäß einer Ausgestaltung der Erfindung ist vorgesehen, dass die Anzeigefläche durch einen transluziden Bereich der Platte gebildet ist und dass ein Projektor vorgesehen ist, der unterhalb der Platte angeordnet ist und ein Bild auf die Anzeigefläche projizieren kann. Dies eröffnet mehr Möglichkeiten zur optischen Darstellung als eine Anzeigevorrichtung.

Vorzugsweise ist vorgesehen, dass die Anzeigefläche auf der einem Bediener zugewandten Seite der Waagschale angeordnet ist. Dies ist ergonomisch vorteilhaft, da der Bediener die Anzeigefläche in derselben Blickrichtung ablesen kann, in der auch die Waagschale liegt.

Gemäß einer alternativen Ausführungsform ist ein Projektor vorgesehen, der oberhalb der Arbeitsfläche angeordnet ist und ein Bild auf die Anzeigefläche projizieren kann. Der Vorteil dieser Ausgestaltung besteht darin, dass oberhalb der Arbeitsfläche grundsätzlich mehr Platz für die Anbringung des Projektors zur Verfügung steht.

Die Anzeigefläche kann auch auf der dem Arbeitsraum der Wägekabine zugewandten Rückwand angeordnet sein. Dies ist dahingehend vorteilhaft, dass ein geringes Risiko besteht, dass ein Benutzer ein von einem Projektor auf die Anzeigefläche projiziertes Bild mit seinen Händen abschattet, wenn er die Waage bedient. Auch die Bedienflächen können zumindest teilweise an dieser Rückwand angeordnet sein.

Gemäß einer Ausgestaltung der Erfindung ist eine Identifizierungsfläche vorgesehen, der eine optische Aufnahmevorrichtung zugeordnet ist, insbesondere eine Kamera oder ein Scanner. Dies ermöglicht die Identifizierung und Dokumentation von Proben.

Gemäß einer weiteren Ausgestaltung der Erfindung ist eine Identifizierungsfläche vorgesehen, die eine elektromagnetische Identifizierung der Probe ermöglicht (z.B. RFID).

Vorzugsweise ist vorgesehen, dass die die Arbeitsfläche bildende Platte aus Glas oder Glaskeramik besteht. Eine solche Platte weist eine sehr glatte und damit gut zu reinigende Oberfläche auf, die noch dazu sehr widerstandsfähig gegen unterschiedliche Reinigungsmittel ist.

Gemäß einer Ausgestaltung der Erfindung können in die Wägekabine Hilfsmittel integriert sein, beispielsweise eine Dosierhilfe, eine Vorrichtung zur statischen Entladung, eine Entsorgungsvorrichtung für Proben, eine Reinigungsvorrichtung, eine Desinfektionsvorrichtung, eine Vorrichtung zur Detektion von toxischen bzw. mikrobiellen Verunreinigungen oder eine Dekontaminationsvorrichtung. Auf diese Weise wird die Wägekabine zu einer multifunktionalen Arbeitskabine, in der die Proben insgesamt gehandhabt werden können.

Gemäß einer Ausgestaltung der Erfindung ist eine Absaugvorrichtung vorgesehen. Dies ermöglicht, in der Wägekabine auch mit toxischen bzw. gesundheitsgefährdenden Substanzen zu arbeiten.

Gemäß einer Ausgestaltung der Erfindung ist vorgesehen, dass der Waagschale ein Windschutz zugeordnet ist. Dieser ist vorzugsweise abnehmbar, so dass die Arbeitsfläche weiterhin gut gereinigt werden kann.

Die Erfindung wird nachfolgend anhand zweier Ausführungsformen beschrieben, die in den beigefügten Zeichnungen dargestellt sind. In diesen zeigen:
- Figur 1 in einer schematischen, perspektivischen Ansicht eine Wägekabine gemäß einer ersten Ausführungsform der Erfindung ;
- Figur 2 einen schematischen Schnitt durch die Arbeitsfläche der Wägekabine von Figur 1 im Bereich der Waagschale;
- Figur 3 einen schematischen Schnitt durch die Arbeitsfläche der Wägekabine von Figur 1 im Bereich einer Bedienfläche; und
- Figur 4 in einer schematischen, perspektivischen Ansicht eine Wägekabine gemäß einer zweiten Ausführungsform der Erfindung.

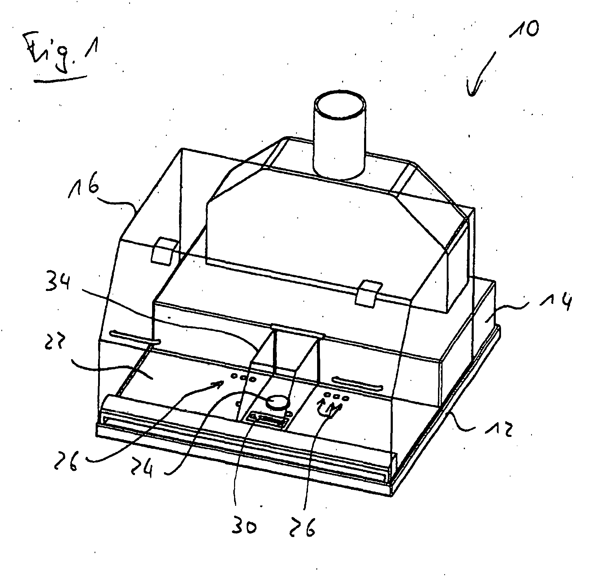

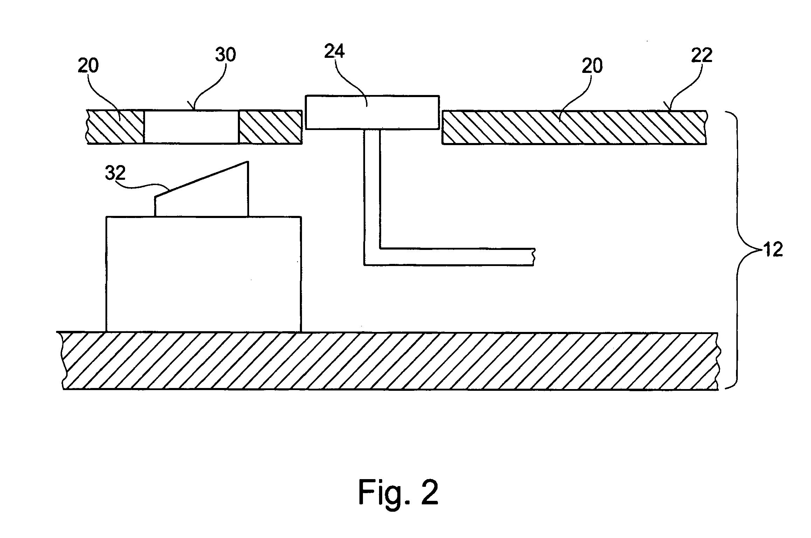

In Figur 1 ist eine Wägekabine 10 gezeigt, die ein Bodenteil 12, ein Gehäuse 14 und mehrere Kabinenwände 16 aufweist. Das Bodenteil 12 enthält eine Arbeitsplatte 20 (siehe auch Figur 2), deren obere Seite eine Arbeitsfläche 22 bildet. In der Arbeitsplatte 20, insbesondere in einer entsprechenden Aussparung, ist eine Waagschale 24 angeordnet, die einer (nicht dargestellten) Feinwaage zugeordnet ist und mit der verschiedene Substanzen und Proben abgewogen werden können. Die Arbeitsplatte 20 besteht vorzugsweise aus Glas oder Glaskeramik und ist (abgesehen von der Aussparung zur Aufnahme der Waagschale 24) durchgehend und eben ausgeführt, weist also keinerlei Schlitz, Fuge oder sonstige Unterbrechung auf, in der sich Partikel festsetzen könnten.

Im Rahmen der Erfindung ist auch möglich, die Waagschale anderweitig anzubinden, beispielsweise einen Lastaufnehmer zu verwenden, der sich aus dem Gehäuse 14 heraus erstreckt, so dass die Arbeitsfläche vollständig geschlossen ausgeführt werden kann.

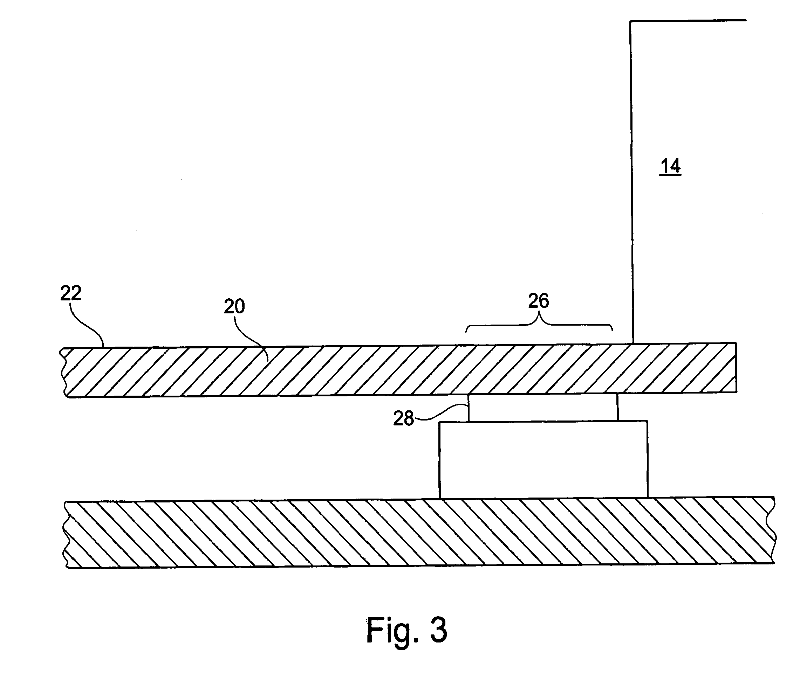

An der Arbeitsplatte 20 sind mehrere Bedienflächen 26 vorgesehen, die als optisch abgegrenzte Bereiche der durchgehenden Arbeitsfläche 22 ausgeführt sind. Den Bedienflächen 26 ist ein Sensor 28 (siehe Figur 3) zugeordnet, der unterhalb der Bedienflächen 26 angeordnet ist und eine Berührung oder anderweitige Betätigung der entsprechenden Bedienfläche 26 erfassen kann. Der Sensor 28 kann beispielsweise ein kapazitiver Sensor sein, mit dem erfasst werden kann, ob die Bedienfläche 26 mit einem Finger berührt wird. Der Sensor 28 kann auch ein optischer Sensor sein, der beispielsweise ähnlich wie eine Fotodiode erfasst, ob die Bedienfläche 26 von einem Finger eines. Bedieners verdunkelt wird. Grundsätzlich sind auch andere Arten von Sensoren möglich, mit denen erfasst werden kann, ob eine Interaktion mit der entsprechenden Bedienfläche 26 vorliegt oder nicht. Dabei wird die Arbeitsplatte 20 im Bereich der Bedienfläche 26 geeignet ausgestaltet, um es dem Sensor 28 zu ermöglichen, eine Betätigung der Bedienfläche 26 zu erfassen. Beispielsweise kann, wenn ein optischer Sensor verwendet wird, die Arbeitsplatte 20 im Bereich der Bedienfläche 26 durchsichtig sein. Der Sensor 28 kann auch unmittelbar in die Arbeitsplatte 20 integriert sein, beispielsweise in der Form einer Vielzahl von kapazitiven Sensorzellen, mit denen ein Touchpad realisiert werden kann. Zur optischen Abgrenzung der Bedienflächen 26 können beispielsweise farbliche Markierungen auf die Arbeitsplatte 20 aufgedruckt sein, und zwar je nach Anforderung sowohl auf die Arbeitsfläche 22 als auch auf die Unterseite der Arbeitsplatte 20.

In die Arbeitsplatte 20 ist auch eine Anzeigefläche 30 integriert (siehe Figur 2), wobei auch hier die Anzeigefläche 30 lediglich als ein definierter Bereich der durchgehenden Arbeitsfläche 22 ausgeführt ist. Bei der in Figur 2 gezeigten Ausführungsform ist die Arbeitsplatte 20 im Bereich der Anzeigefläche 30 durchsichtig, und unterhalb der Anzeigefläche 30 ist eine Anzeigevorrichtung 32 angeordnet, beispielsweise ein LCD-Display, das hier schräg angestellt ist. Dies verbessert die Ablesbarkeit. Wie in Figur 1 zu sehen ist, ist die Anzeigefläche 30 "vor" der Waagschale 24 angeordnet, so dass ein Bediener, der eine Probe auf der Waagschale 24 abwiegt, seine Blickrichtung zum Ablesen des aktuellen Wägeergebnisses nur geringfügig ändern muss.

Die Waagschale 24 ist von einem Windschutz 34 umgeben, um eine Verfälschung des Wägeergebnisses durch Luftbewegungen zu vermeiden. Der Windschutz 34 ist dabei abnehmbar, so dass die Arbeitsplatte 20 frei zugänglich ist und gut gereinigt werden kann. Auch die Kabinenwände 16 sind abnehmbar, so dass alle Bauteile der Wägekabine gut gereinigt werden können.

Alternativ zur Ausgestaltung der Anzeigefläche 30 als Fenster kann die Anzeigefläche 30 auch als transluzider Bereich der Arbeitsplatte 20 verwirklicht werden, dem ein unterhalb angeordneter Projektor zugeordnet ist. Dieser Projektor projiziert ein Bild auf die Unterseite der Arbeitsplatte 20, das aufgrund der transluziden Eigenschaften dann auf der Oberfläche sichtbar ist. Eine transluzide Arbeitsplatte 20 ermöglicht auch, die Bedienflächen 26 dadurch darzustellen, dass ein entsprechender Umriss von unten auf die Arbeitsplatte projiziert wird.

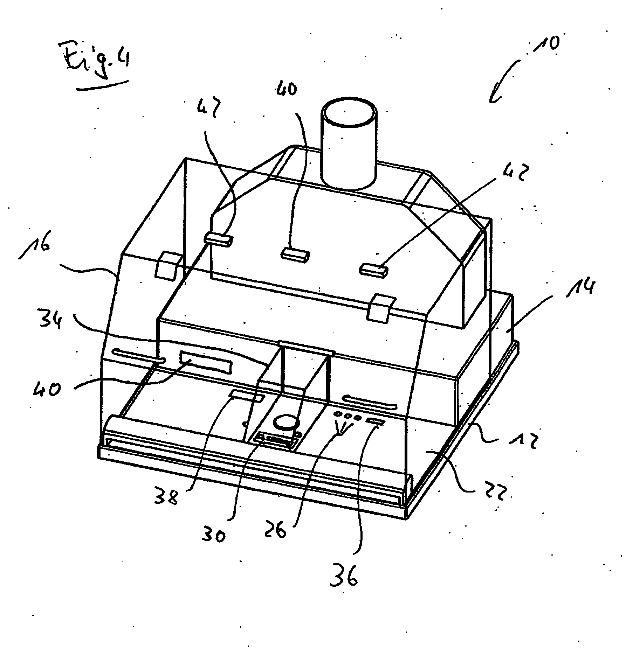

In Figur 4 ist eine Wägekabine gemäß einer zweiten Ausführungsform gezeigt, die allerdings hinsichtlich der Anordnung des Sensors nicht zur Erfindung gehört. Für die von der ersten Ausführungsform bekannten Bauteile werden dieselben Bezugszeichen verwendet, und es wird insoweit auf die obigen Erläuterungen verwiesen.

Allgemein ausgedrückt besteht der Unterschied zwischen der ersten und der zweiten Ausführungsform darin, dass bei der zweiten Ausführungsform die Sensoren zur Erfassung einer Eingabe sowie die Anzeigevorrichtung oberhalb der Arbeitsplatte 20 angeordnet sind.

Auch bei der zweiten Ausführungsform ist die Arbeitsplatte 20 durchgehend ausgeführt, so dass die Arbeitsfläche 22 unterbrechungsfrei verläuft. Auf ihr sind verschiedene Bedienflächen vorgesehen, wobei zusätzlich eine Identifizierungsfläche 36 und eine Multifunktionsfläche 38 vorgesehen sind.

Eine Interaktion mit einer der Bedienflächen 36 wird bei der zweiten Ausführungsform mittels eines optischen Sensors 42 erkannt, der beispielsweise an einer Decke der Arbeitskabine angeordnet ist. Der Sensor 42 kann als Kamera oder Laserscanner ausgeführt sein und ist in der Lage, das Bedienfeld zu überwachen, um zu erfassen, wenn ein Bediener mit einem Finger oder einen sonstigen Gegenstand eine der Bedienflächen 26 überdeckt.

Der Sensor 42 erfasst auch die Identifizierungsfläche 36 und ist in der Lage, einen dort hingelegten Barcode, eine Identifizierungsnummer oder ähnliche Information zu erfassen, die dann beispielsweise archiviert werden können, um bestimmte Wägeprozesse eindeutig zu dokumentieren.

Der Multifunktionsfläche 38 ist ein zweiter Sensor 42 zugeordnet, der entsprechende Eingaben dort erfassen kann. Kennzeichen der Multifunktionsfläche ist, dass auf ihr verschiedene Informationen angezeigt werden können ("Soft-Key-Fläche"), die von einem Projektor ober- oder unterhalb der Arbeitsplatte auf die Multifunktionsfläche 38 projiziert werden können - so z. B. auch Anweisungen in Form von Volltexten. Auf diese Weise lassen sich die jeweiligen Eingabemöglichkeiten an den aktuellen Wägeprozess bzw. den jeweils vorliegenden Teilschritte im Wägeprozess anpassen und eine komfortable Bedienerführung realisieren.

Nach einer Kombination der beiden bisher beschriebenen Ausführungsformen können Eingaben auf der Multifunktionsfläche 38 mit Hilfe von Sensoren 28, die innerhalb der Multifunktionsfläche 28 angeordnet sind, erfolgen.

Zur Darstellung des Wägeergebnisses wird ein Projektor 40 verwendet, der ebenfalls beispielsweise an der Decke der Wägekabine angeordnet ist und das Wägeergebnis auf die Anzeigefläche 30 projiziert. Anders ausgedrückt dient die Arbeitsfläche 22 hier als Projektionsfläche, auf der das Wägeergebnis dargestellt wird. Zusätzlich kann vorgesehen sein, dass auch auf einer Wand 50 des Gehäuses, die dem Bediener zugewandt ist, eine Anzeigefläche 30 vorgesehen ist, auf die einer der Projektoren 40 ein Bild projiziert.

### Bezugszeichenliste

- 10: Wägekabine
- 12: Bauteil
- 14: Gehäuse
- 16: Kabinenwände
- 20: Arbeitsplatte
- 22: Arbeitsfläche
- 24: Waagschale
- 26: Bedienfläche
- 28: Sensor
- 30: Anzeigefläche
- 32: Anzeigevorrichtung
- 34: Windschutz
- 36: Identifizierungsfläche
- 38: Multifunktionsfläche
- 40: Projektor
- 42: Sensor

## Patentansprüche

1. Wägekabine (10) mit einer Arbeitsfläche (22), einer Waage, die in die Wägekabine integriert ist und eine Waagschale (24) aufweist, die an der Arbeitsfläche (22) angeordnet ist, und mindestens einer Bedienfläche (26), die im Bereich der Arbeitsfläche (22) angeordnet ist, wobei die Arbeitsfläche (22) durch die Oberfläche einer ebenen, durchgehenden Platte (20) gebildet ist, **dadurch gekennzeichnet, dass** die Bedienfläche (26) in die Arbeitsfläche (22) integriert und als Sensorfläche ausgeführt ist und unterhalb der die Arbeitsfläche bildenden Platte ein Sensor (28) angeordnet ist.

2. Wägekabine nach Anspruch 1, **dadurch gekennzeichnet, dass** die Bedienfläche (26) optisch markiert ist.

3. Wägekabine nach Anspruch 1 oder Anspruch 2, **dadurch gekennzeichnet, dass** der Sensor (28) als kapazitiver Sensor, optischer Sensor, induktiver Sensor oder akustischer Sensor ausgeführt ist.

4. Wägekabine nach einem der vorhergehenden Ansprüche, **dadurch gekennzeichnet, dass** der Bedienfläche (26) eine Projektionsvorrichtung zugeordnet ist, die unterschiedliche Bediensymbole oder Textanweisungen auf die Bedienfläche projizieren kann.

5. Wägekabine nach einem der vorhergehenden Ansprüche, **dadurch gekennzeichnet, dass** auf der Arbeitsfläche (22) mindestens eine Anzeigefläche (30) vorgesehen ist.

6. Wägekabine nach Anspruch 5, **dadurch gekennzeichnet, dass** die Anzeigefläche (30) durch ein durchsichtiges Fenster gebildet ist, unterhalb dessen eine Anzeigevorrichtung (32) angeordnet ist.

7. Wägekabine nach Anspruch 6, **dadurch gekennzeichnet, dass** die Anzeigevorrichtung (32) schräg zur Ebene der Platte angeordnet ist.

8. Wägekabine nach Anspruch 5, **dadurch gekennzeichnet, dass** die Anzeigefläche (30) durch einen transluziden Bereich der Platte gebildet ist und dass ein Projektor vorgesehen ist, der unterhalb der Platte angeordnet ist und ein Bild auf die Anzeigefläche projizieren kann.

9. Wägekabine nach einem der Ansprüche 5 bis 8, **dadurch gekennzeichnet, dass** die Anzeigefläche (30) auf der einem Bediener zugewandten Seite der Waagschale angeordnet ist.

10. Wägekabine nach einem der Ansprüche 5 bis 8, **dadurch gekennzeichnet, dass** die Anzeigefläche (30) auf der dem Arbeitsraum der Wägekabine zugewandten Rückwand angeordnet ist.

11. Wägekabine nach einem der Ansprüche 5 bis 10, **dadurch gekennzeichnet, dass** ein Projektor vorgesehen ist, der oberhalb der Arbeitsfläche angeordnet ist und ein Bild auf die Anzeigefläche projizieren kann.

12. Wägekabine nach einem der vorhergehenden Ansprüche, **dadurch gekennzeichnet, dass** eine Identifizierungsfläche (36) vorgesehen ist, der eine Aufnahmevorrichtung zugeordnet ist, insbesondere eine Kamera, ein Scanner oder ein RFID-Leser.

13. Wägekabine nach einem der vorhergehenden Ansprüche, **dadurch gekennzeichnet, dass** die die Arbeitsfläche bildende Platte (20) aus Glas oder Glaskeramik besteht.

14. Wägekabine nach einem der vorhergehenden Ansprüche, **dadurch gekennzeichnet, dass** Hilfsmittel wie eine Dosierhilfe, eine Vorrichtung zur statischen Entladung, eine Entsorgungsvorrichtung für Proben, eine Reinigungsvorrichtung, eine Vorrichtung zur Detektion von toxischen bzw. mikrobiellen Verunreinigungen, eine Desinfektionsvorrichtung oder eine Dekontaminationsvorrichtung integriert sind.

15. Wägekabine nach einem der vorhergehenden Ansprüche, **dadurch gekennzeichnet, dass** eine Absaugvorrichtung vorgesehen ist.

16. Wägekabine nach einem der vorhergehenden Ansprüche, **dadurch gekennzeichnet, dass** der Waagschale (24) ein Windschutz (34) zugeordnet ist.

## Claims

1. Weighing compartment (10) with a work surface (22), scales, which are integrated in the weighing compartment and which comprise a weighing pan (24) arranged at the work surface (22), and at least one control panel (26), which is arranged in the region of the work surface (22), wherein the work surface (22) is formed by the surface of a planar, continuous plate (20), **characterised in that** the control panel (26) is integrated in the work surface (22) and constructed as a sensor surface, and a sensor (28) is arranged below the plate forming the work surface.

2. Weighing compartment according to claim 1, **characterised in that** the control surface (26) is visually marked.

3. Weighing compartment according to claim 1 or claim 2, **characterised in that** the sensor (28) is constructed as a capacitive sensor, optical sensor, inductive sensor or acoustic sensor.

4. Weighing compartment according to any one of the preceding claims, **characterised in that** a projection device is associated with the control panel (26) and can project different control symbols or textual instructions onto the control panel.

5. Weighing compartment according to any one of the preceding claims, **characterised in that** at least one display area (30) is provided on the work surface (22).

6. Weighing compartment according to claim 5, **characterised in that** the display area (30) is formed by a transparent window, under which a display device (32) is arranged.

7. Weighing compartment according to claim 6, **characterised in that** the display device (32) is arranged at an inclination to the plane of the plate.

8. Weighing compartment according to claim 5, **characterised in that** the display area (30) is formed by a translucent region of the plate and that a projector is provided which is arranged under the plate and can project an image onto the display area.

9. Weighing compartment according to any one of claims 5 to 8, **characterised in that** the display area (30) is arranged on the side of the scales facing an operator.

10. Weighing compartment according to any one of claims 5 to 8, **characterised in that** the display area (30) is arranged on the rear wall facing the working space of the weighing compartment.

11. Weighing compartment according to any one of claims 5 to 10, **characterised in that** a projector which is arranged above the work surface and can project an image onto the display area is provided.

12. Weighing compartment according to any one of the preceding claims, **characterised in that** an identification area (36), with which a recording device, particularly a camera, a scanner or an RFID reader, is associated, is provided.

13. Weighing compartment according to any one of the preceding claims, **characterised in that** the plate (20) forming the work surface consists of glass or glass-ceramic.

14. Weighing compartment according to any one of the preceding claims, **characterised in that** auxiliary means such as a metering aid, a device for static discharging, a disposal device for samples, a cleaning device, a device for detection of toxic or microbial contaminants, a disinfecting device or a decontamination device are integrated.

15. Weighing compartment according to any one of the preceding claims, **characterised in that** a suction device is provided.

16. Weighing compartment according to any one of the preceding claims, **characterised in that** wind protection means (34) are associated with the scales (24).

## Revendications

1. Cabine de pesée (10) comprenant une surface de travail (22), une balance, qui est intégrée dans la cabine de pesée et présente un plateau de balance (24), qui est disposé sur la surface de travail (22), et au moins une surface de commande (26), qui est agencée dans la partie de la surface de travail (22), la surface de travail (22) étant formée par la surface d'un plateau (20), plan, allant de part en part, **caractérisée en ce que** la surface de commande (26) est intégrée dans la surface de travail (22) et est conçue sous la forme d'une surface de captage et, qu'en dessous du plateau formant la surface de travail, se trouve disposé un capteur (28).

2. Cabine de pesée selon la revendication 1, **caractérisée en ce que** la surface de commande (26) est marquée optiquement.

3. Cabine de pesée selon la revendication 1 ou la revendication 2, **caractérisée en ce que** le capteur (28) est conçu sous la forme d'un capteur capacitif, d'un capteur optique, d'un capteur inductif ou d'un capteur acoustique.

4. Cabine de pesée selon l'une des revendications précédentes, **caractérisée en ce qu'**un dispositif de projection, qui peut projeter les divers symboles d'utilisation ou indications sous la forme de textes sur la surface de commande, est associé à la surface de commande (26).

5. Cabine de pesée selon l'une des revendications précédentes, **caractérisée en ce qu'**au moins une surface d'affichage (30) est prévue sur la surface de travail (22).

6. Cabine de pesée selon la revendication 5, **caractérisée en ce que** la surface d'affichage (30) est formée par une fenêtre transparente, en dessous de laquelle est disposé un dispositif d'affichage (32).

7. Cabine de pesée selon la revendication 6, **caractérisée en ce que** le dispositif d'affichage (32) est disposé incliné par rapport au plan du plateau.

8. Cabine de pesée selon la revendication 5, **caractérisée en ce que** la surface d'affichage (30) est formée par une partie translucide du plateau et qu'un projecteur, qui est disposé en dessous du plateau et qui peut projeter une image sur la surface d'affichage, est prévu.

9. Cabine de pesée selon l'une des revendications de 5 à 8, **caractérisée en ce que** la surface de travail (30) est agencée sur le côté du plateau de la balance orienté vers un utilisateur.

10. Cabine de pesée selon l'une des revendications de 5 à 8, **caractérisée en ce que** la surface d'affichage (30) est agencée sur la paroi arrière orientée vers l'espace de travail de la cabine de pesée.

11. Cabine de pesée selon l'une des revendications de 5 à 10, **caractérisée en ce qu'**un projecteur, qui est agencé au dessus de la surface de travail et peut projeter une image sur la surface d'affichage, est prévu.

12. Cabine de pesée selon l'une des revendications précédentes, **caractérisée en ce qu'**une surface d'identification (38), à laquelle est associé un dispositif de prise de vue, notamment une caméra, un scanner ou un lecteur RFID, est prévue.

13. Cabine de pesée selon l'une des revendications précédentes, **caractérisée en ce que** le plateau (20) formant la surface de travail est constitué de verre ou de vitrocéramique.

14. Cabine de pesée selon l'une des revendications précédentes, **caractérisée en ce que** des moyens auxiliaires, comme une aide au dosage, un dispositif pour un chargement statique, un dispositif d'évacuation pour des échantillons, un dispositif de nettoyage, un dispositif pour la détection d'impuretés toxiques, respectivement, microbiennes, un dispositif de désinfection ou un dispositif de décontamination, sont intégrés.

15. Cabine de pesée selon l'une des revendications précédentes, **caractérisée en ce qu'**un dispositif d'aspiration est prévu.

16. Cabine de pesée selon l'une des revendications précédentes, **caractérisée en ce qu'**une protection contre les courants d'air (34) est associée au plateau de balance (24).
